# EUROPÄISCHE PATENTSCHRIFT

(11) **EP 2 075 486 B1**
(45) Veröffentlichungstag und Bekanntmachung des Hinweises auf die Patenterteilung: **11.05.2011**
(21) Anmeldenummer: 08021717.7
(22) Anmeldetag: 15.12.2008
(51) Int. Cl.: F16H 3/093

(54) **Geschwindigkeits-Wechselgetriebe für Kraftfahrzeuge**
Gearbox for motor vehicles
Boîte de vitesses pour véhicules automobiles

(30) Priorität: 31.12.2007 DE 102007063253
(43) Veröffentlichungstag der Anmeldung: 01.07.2009
(73) Patentinhaber: VOLKSWAGEN AG, 38436 Wolfsburg (DE)
(72) Erfinder: Blumenstein, Fritz, 38448 Wolfsburg (DE); Gröhlich, Hubert, 38100 Braunschweig (DE)

(56) Entgegenhaltungen:
- WO-A-2007/098842
- DE-A1- 19 624 857
- DE-A1-102004 056 936
- DE-A1-102006 016 059

## Beschreibung

Die Erfindung betrifft ein Geschwindigkeits-Wechselgetriebe für Kraftfahrzeuge gemäß dem Oberbegriff des Patentanspruches 1.

Ein derartiges Wechselgetriebe für den frontseitigen Quereinbau in Kraftfahrzeuge beschreibt beispielsweise die DE 41 40 031 A1. U. a. ist dieses Wechselgetriebe mit sechs Vorwärts-Gangstufen und einem Rückwärtsgang so konzipiert, dass möglichst geringer Einbauraum hauptsächlich in axialer Richtung erforderlich ist. Um die Gangabstufungen bzw. Übersetzungsverhältnisse zwischen den einzelnen Gängen optimal abstimmen zu können, ist kein Gangzahnrad für zwei Gangstufen ausgelegt, was bekanntlich den Vorteil geringerer Baulänge des Getriebes und weniger Zahnräder ermöglicht. Andererseits können dadurch die Achsabstände der Abtriebswellen zur Eingangswelle des Getriebes unterschiedlich so ausgelegt werden, dass die gewünschten Gangabstufungen und Übersetzungsverhältnisse auch unter Einbeziehung der Rückwärtsgang-Übersetzung verwirklicht werden können.

Aus der weiteren DE 697 21 974 T2 ist ein Geschwindigkeits-Wechseigetriebe bekannt, bei dem die Abstände der beiden Vorgelegewellen von der Eingangswelle unterschiedlich groß sind. Konkret ist hier ein Abstand zwischen der Eingangswelle und der Vorgelegewelle für den ersten und zweiten Gang größer als der Abstand zwischen der Eingangswelle und der Vorgelegewelle der anderen Gänge.

Aus der DE 10 2004 056 936 A1 ist ein Doppelkupplungsgetriebe für den Frontquereinbau in ein Kraftfahrzeug bekannt. Das Doppelkupplungsgetriebe weist eine Antriebswellenanordnung mit eine erste und eine zweite Antriebswelle auf, die einem ersten bzw. einem zweiten Teilgetriebe zugeordnet sind, und wobei dem ersten Teilgetriebe ungerade Vorwärtsgangstufen und dem zweiten Teilgetriebe gerade Vorwärtsgangstufen zugeordnet sind. Bei dem Doppelkupplungsgetriebe dieser Bauart ist es besonders bevorzugt, wenn die zum Anfahren des Kraftfahrzeugs in Vorwärtsrichtung überwiegend verwendete Vorwärtsgangstufe und die Rückwärtsgangstufe verschiedenen Teilgetrieben zugeordnet sind.

Aus der gattungsgemäßen 2007/098842 A1 ist ein 6- Gang-Handschaltgetriebe in Front-Längseinbauweise bekannt. Das Getriebe ist mit 6 Gangstufen (1. - 6.) und einem Rückwärtsgang (R) ausgebildet. Es weist eine Eingangswelle zwei Abtriebswellen mehrere Fest- und Losräder, ein Rückwärtsgangrad und eine Riltzelwelle auf. Die Eingangswelle und die beiden Abtriebswellen sind im Wesentlichen parallel zur Längachse des Kraftfahrzeugs angeordnet.

Aufgabe der Erfindung ist es, ein Geschwindigkeits-Wechselgetriebe zu schaffen, dessen Radsatzanordnung einen optimierten Kraftfluss innerhalb des Getriebes ermöglicht.

Diese Aufgabe wird erfindungsgemäß mit den kennzeichnenden Merkmalen des Patentanspruches 1 gelöst. Vorteilhafte und zweckmäßige Weiterbildungen der Erfindung sind den Unteransprüchen entnehmbar.

Gemäß dem kennzeichnenden Teil des Patentanspruches 1 ist das gemeinsame Festzahnrad der zwischen einer Brennkraftmaschine und der Eingangswelle angeordneten Reibkupplung (10) nächstliegend angeordnet. Insbesondere kann ein gemeinsames Festzahnrad auf der Eingangswelle mit einem schaltbaren Loszahnrad für die erste Gangstufe auf der ersten Abtriebswelle und mit einem schaltbaren Loszahnrad für einen Rückwärtsgang auf der zweiten Abtriebswelle zusammenwirken. Dies ermöglicht eine vorteilhafte Annäherung der als Anfahrgänge ausgelegten Gangstufen "erster Gang" und Rückwärtsgang.

Der weitern ist der Achsabstand der, Gangzahnräder für kurz übersetzte Gangstufen, etwa die erste und die zweite Gangstufe, tragenden, ersten Abtriebswelle zur Eingangswelle kleiner als der Achsabstand zwischen der Eingangswelle und einer, Gangzahnräder für länger übersetzte Gangstufen tragenden, zweiten Abtriebswelle. Erfindungsgemäß wird daher entgegen der aus dem Stand der Technik bekannten üblichen Bauweisen das Verhältnis der Abstände von Eingangswelle zur ersten Abtriebswelle bzw. zur zweiten Abtriebswelle umgekehrt. D. h. dass der Achsabstand zwischen der Drehachse der Eingangswelle zur zweiten Abtriebswelle größer ist als der Achsabstand zwischen Eingangswelle und erster Abtriebswelle.

Ferner kann der Achsabstand zwischen der ersten Abtriebswelle und der Drehachse eines gemeinsamen Stirnzahnrades eines Differenziales größer sein als der Achsabstand zwischen der zweiten Abtriebswelle und der Drehachse des Stirnzahnrades. Dadurch gelingt es, mit einfachsten, konstruktiven Mitteln den durch die Gangzahnräder vorgegebenen Übersetzungen bzw. Gangstufen eine definierte Grundübersetzung im Antriebszug zwischen Eingangswelle und Stirnzahnrad des Differenziales zu überlagern, die bei geschickter Auslegung weitgehendst optimale Übersetzungsverhältnisse ermöglicht. Dabei können zum einen die Zähnezahlen der mit gemeinsamen Gangzahnrädern auf der Eingangswelle kämmenden Gangzahnräder und zum anderen auch die Zähnezahlen der mit dem Stirnzahnrad des Differenziales

Außerdem ist es erfindungsgemäß ermöglicht, die Achsabstände beider Antriebswellen zur Eingangswelle im akzeptablen Bereich zu halten und trotzdem die Übersetzung des Rückwärtsganges in die Nähe des ersten Ganges zu bringen.

Des Weiteren kann zumindest ein Festzahnrad auf der Eingangswelle mit je einem Loszahnrad auf beiden Abtriebswellen zur Bildung zweier schaltbarer Vorwärts-Gangstufen kämmen, wobei die jeweils längere Gangstufe auf der ersten Abtriebswelle ausgeführt ist. Da die erste Abtriebswelle aufgrund des größeren Achsabstandes mit dementsprechend größerem Abtriebszahnrad bereits eine längere Grundübersetzung zum Stirnzahnrad des Differenziales aufweist, sind günstigere Gangabstufungen mit adäquaten Zahnraddurchmessern bei gegebenen Achsabständen der Abtriebswellen erzielbar.

Räumlich vorteilhafter kann dabei die erste, der Getriebe-Eingangswelle näher liegende Abtriebswelle oberhalb der zweiten Abtriebswelle positioniert sein.

Ferner können fertigungstechnisch und funktionell vorteilhaft alle Festzahnräder auf der Eingangswelle und alle Loszahnräder auf den beiden Abtriebswellen angeordnet sein. Dies erlaubt insbesondere in den kurzen, niedrigeren Gangstufen die Anordnung leistungsfähiger Synchronkupplungen durch günstigere Durchmesserverhältnisse.

Baulich und schaltungstechnisch vorteilhafte und zweckmäßige Anordnungen der Gangstufen sind erzielbar, wenn bei einem Sechsganggetriebe die Loszahnräder für die erste, zweite, vierte und sechste Gangstufe auf der ersten Abtriebswelle und die Loszahnräder für die dritte und fünfte Gangstufe sowie für den Rückwärtsgang auf der zweiten Abtriebswelle positioniert sind. Alternativ können die Loszahnräder für die erste, zweite, fünfte und sechste Gangstufe auf der ersten Abtriebswelle und die Loszahnräder für die dritte, vierte Gangstufe und das Loszahnrad des Rückwärtsganges auf der zweiten Abtriebswelle angeordnet sein.

Bei nur fünf Gangstufen des Getriebes wird vorgeschlagen, die Loszahnräder für die erste, zweite und fünfte Gangstufe auf der ersten Abtriebswelle und die Loszahnräder für die dritte und vierte Gangstufe und das Loszahnrad für den Rückwärtsgang auf der zweiten Abtriebswelle vorzusehen oder es können die Loszahnräder für die erste, zweite und vierte Gangstufe auf der ersten Abtriebswelle und die Loszahnräder für die dritte und fünfte Gangstufe und das Loszahnrad für den Rückwärtsgang auf der zweiten Abtriebswelle vorgesehen sein.

Alternativ zu einer Getriebe-Eingangswelle mit allen Festzahnrädern können für zumindest zwei höhere, längere Gangstufen die Loszahnräder auf der Eingangswelle und die Festzahnräder auf der ersten Abtriebswelle angeordnet sein. Dies kann mit Hinblick auf größere, wirksame Durchmesser der Reibkonen der Synchronkupplungen vorteilhaft sein.

Schließlich können baulich vorteilhaft bei einem Getriebebausatz mit sechs oder nur fünf Vorwärts-Gangstufen bei dem Fünfganggetriebe die oben liegende, erste oder zweite Abtriebswelle axial verkürzt sein und ggf. nur ein Loszahnrad einer Vorwärts-Gangstufe tragen. Durch entsprechende Anpassung (Einschnürung) des Getriebegehäuses kann somit zusätzlicher Bauraum innerhalb des Motorraumes des Kraftfahrzeuges bereitgestellt werden.

Mehrere Ausführungsbeispiele der Erfindung sind im Folgenden mit weiteren Einzelheiten näher erläutert. Die anhängende, als Blockschaltbilder ausgeführte Zeichnung zeigt in:
- Fig. 1: ein Geschwindigkeits-Wechselgetriebe für den Quereinbau in frontgetriebenen Kraftfahrzeugen mit angebautem Differenzial, mit einer Eingangswelle, zwei Ab- triebswellen und mit sechs Vorwärtsgängen und einem Rückwärtsgang;
- Fig. 2: das Wechselgetriebe gemäß Fig. 1 in einer Seitenprojektion, mit tatsächlicher räumlicher Lage der Drehachsen der Wellen und des Stirnzahnrades des Differenziales;
- Fig. 3: ein der Fig. 1 entsprechendes Wechselgetriebe mit veränderter Anordnung der höheren, längeren Gangstufen;
- Fig. 4: ein weiteres, der Fig. 1 entsprechendes Wechselgetriebe mit nur fünf Vorwärtsgängen und einer axial verkürzten Abtriebswelle;
- Fig. 5: ein zur Fig. 4 alternatives Fünfgang-Wechselgetriebe mit veränderter Anordnung der höheren, längeren Gangstufen; und
- Fig. 6: ein zu den Fig. 4 und 5 alternatives, weiteres Fünfgang-Wechselgetriebe mit umgekehrter Anordnung der Abtriebswellen und wiederum veränderter Anordnung der Gangstufen.

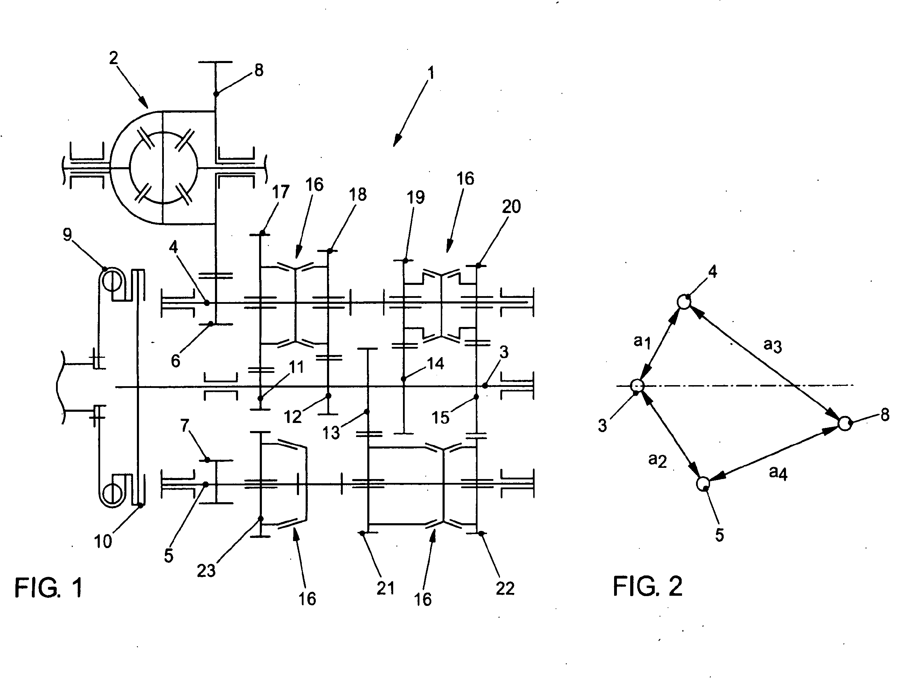

Die Fig. 1 zeigt als Blockschaltbild ein Geschwindigkeits-Wechselgetriebe 1 für den Quereinbau in ein frontgetriebenes Kraftfahrzeug, an das ein Differenzial 2 üblicher Bauart angebaut ist.

Das Wechselgetriebe 1 weist im Wesentlichen eine Eingangswelle 3 und zwei Abtriebswellen 4, 5 auf. Die achsparallel zueinander angeordneten Wellen 3, 4, 5 sind in einem nicht dargestellten Getriebegehäuse des Wechselgetriebes 1 in üblicher Weise drehbar gelagert.

Die Abtriebswellen 4, 5 tragen jeweils ein Abtriebszahnrad 6, 7, die mit einem Stirnzahnrad 8 des Differenziales 2 in Eingriff sind. Ferner ist die Eingangswelle 3 des Wechselgetriebes 1 über einen Drehschwingungsdämpfer 9 und eine nachgeschaltete Reibungskupplung 10 trieblich mit der nicht dargestellten Brennkraftmaschine des Kraftfahrzeuges verbunden.

Während in der Fig. 1 die besagten Wellen 3 bis 5 und das Differenzial 2 in einer einheitlichen Zeichnungsebene dargestellt sind, zeigt die Fig. 2 die räumliche Lage der Drehachsen des Stirnzahnrades 8 des Differenziales 2 und die Drehachsen der Wellen 3 bis 5 zueinander.

Wie aus Fig. 2 ersichtlich ist, ist der Abstand a₁ zwischen der Eingangswelle 3 und der ersten, oberhalb der Eingangswelle 3 positionierten Abtriebswelle 4 kleiner als der Abstand a₂ zwischen der Eingangswelle 3 und der darunter liegenden, zweiten Abtriebswelle 5.

Ferner ist der Abstand a₃ zwischen der oberen Abtriebswelle 4 zur Drehachse des Stirnzahnrades 8 des Differenziales 2 größer als der Abstand a₄ zur unteren Abtriebswelle 5. Die Drehachsen der Eingangswelle 3 und des Stirnzahnrades 8 liegen im Wesentlichen horizontal gegenüber, während die Drehachsen der beiden Abtriebswellen 4, 5 etwa vertikal zueinander ausgerichtet sind.

Aus den besagten Abständen der Drehachsen resultiert, dass bei Betrachtung einer Grundübersetzung im Antriebszug bei einem gemeinsamen Gangzahnrad (vgl. nachfolgende Beschreibung) auf der Eingangswelle 3 und korrespondierenden Gangzahnrädern auf den Abtriebswellen 4, 5 die den Abstand a₁ aufweisende Abtriebswelle 4 mit höherer Drehzahl angetrieben wird. Des Weiteren wird das Stirnzahnrad 8 des Differenziales 2 mit höherer Drehzahl angetrieben, weil das Abtriebszahnrad 6 aufgrund des größeren Abstandes a₃ eine höhere Zähnezahl als das Abtriebszahnrad 7 auf der Abtriebswelle 5 aufweisen kann.

Die Eingangswelle 3 ist mit fünf Festzahnrädern 11, 12, 13, 14, 15 versehen, die mit über Synchronkupplungen (allgemein mit 16 bezeichnet) schaltbaren Loszahnrädern 17 bis 20 auf der Abtriebswelle 4 und mit über Synchronkupplungen 16 schaltbaren Loszahnrädern 21, 22 auf der Abtriebswelle 5 kämmen und die dementsprechend die sechs Vorwärts-Gangstufen bilden.

Die Zahnräder 11, 17 ergeben die erste (Anfahr-)Gangstufe, die Zahnräder 12, 18 die zweite Gangstufe, die Zahnräder 14, 19 die vierte Gangstufe und die Zahnräder 15, 20 die sechste Gangstufe, die über die obere Abtriebswelle 4 und das Abtriebszahnrad 6 auf das Differenzial 2 abtreiben.

Ferner bilden die Zahnräder 13, 21 die dritte Gangstufe und die Zahnräder 15, 22 die fünfte Gangstufe des Wechselgetriebes 1, die über die zweite Abtriebswelle 5 und das Abtriebszahnrad 7 auf das Differenzial 2 abtreiben.

Über das Festzahnrad 11 auf der Eingangswelle 3 und das über eine Synchronkupplung 16 schaltbare Loszahnrad 23 auf der Abtriebswelle 5 ist der Rückwärtsgang gebildet, wobei zwischen den beiden Zahnrädern 11, 23 ein auf einer Achse drehbar gelagertes Umkehrzahnrad (der besseren Übersichtlichkeit wegen nicht dargestellt) vorgesehen ist.

Wie sich aus vorstehenden Erläuterungen ergibt, sind die beiden Festzahnräder 11 und 15 auf der Eingangswelle 3 jeweils gemeinsam antreibende Zahnräder, und zwar das Festzahnrad 11 für die erste Gangstufe 11, 17 und den Rückwärtsgang 11, 23 und das Festzahnrad 15 für die sechste Gangstufe 15, 20 und die fünfte Gangstufe 15, 22.

Dies hat den Vorteil, dass im vorliegenden Falle der ersten Gangstufe (im Vergleich zum Rückwärtsgang) und der sechsten Gangstufe (im Vergleich zur fünften Gangstufe) die vorbeschriebene, längere Grundübersetzung überlagert wird.

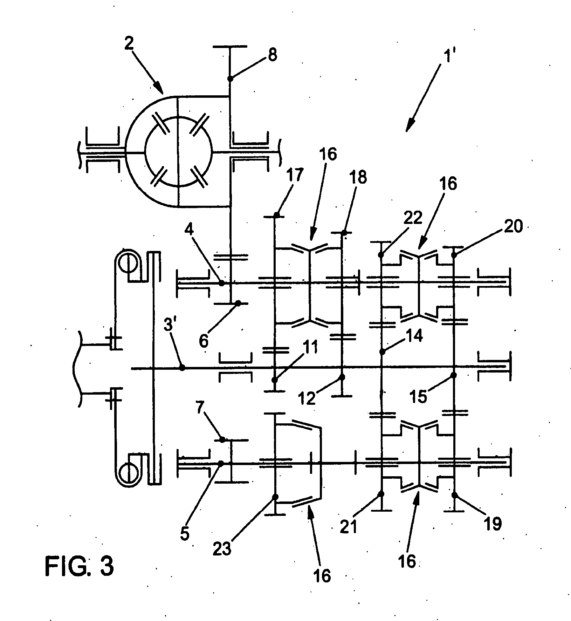

Die Fig. 3 bis 6 zeigen alternative Ausgestaltungen des Wechselgetriebes 1, die nur soweit beschrieben sind, als sie sich wesentlich von den Fig. 1 und 2 unterscheiden. Die besagten Abstände a₁ bis a₄ gemäß Fig. 2 sind für alle alternativen Vorschläge maßgebend. Funktionell gleiche Teile sind mit gleichen Bezugszeichen versehen.

Abweichend zur Fig. 1 weist in Fig. 3 die Eingangswelle 3' des Wechselgetriebes 1' nur vier Festzahnräder 11, 12, 14, 15 auf, von denen die Festzahnräder 14, 15 als gemeinsame Zahnräder jeweils mit zwei über Synchronkupplungen 16 schaltbaren Loszahnrädern 19, 20, 21, 22 auf den Abtriebswellen 4, 5 kämmen.

Dementsprechend bilden die Zahnräder 14, 21 die dritte Gangstufe, die Zahnräder 15, 19 die vierte Gangstufe mit der zweiten Abtriebswelle 5, während die Zahnräder 14, 22 die fünfte Gangstufe und die Zahnräder 15, 20 die sechste Gangstufe mit der Abtriebswelle 4 darstellen.

Festzustellen ist, dass wiederum die längere Übersetzung bzw. die höheren Gangstufen (vier bzw. sechs) mit Vergleich zum jeweils gemeinsamen Festzahnrad 14, 15 auf der Eingangswelle 3' über die Abtriebswelle 4 mit der längeren Grundübersetzung angeordnet sind.

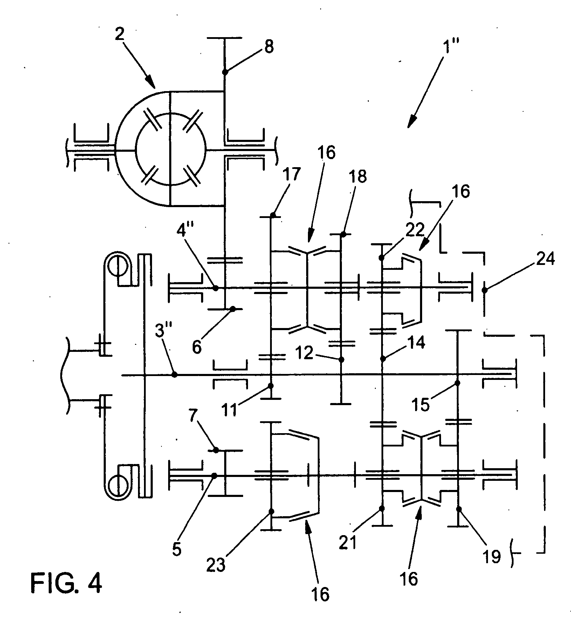

Die Fig. 4 zeigt ein alternatives Wechselgetriebe 1", das nur mit fünf Vorwärts-Gangstufen ausgeführt ist.

Die Eingangswelle 3" trägt wiederum nur vier Festzahnräder 11, 12, 14, 15, wobei nur das Festzahnrad 14 als gemeinsames Zahnrad mit dem über Synchronkupplungen 16 schaltbaren Loszahnrad 21 auf der Abtriebswelle 5 zur Bildung der dritten Gangstufe und mit dem Loszahnrad 22 auf der Abtriebswelle 4" kämmt.

Hingegen treibt das Festzahnrad 15 nur auf das Zahnrad 19 auf der Abtriebswelle 5 zur Herstellung der vierten Gangstufe des Wechselgetriebes 1".

Durch den Entfall der sechsten Gangstufe gemäß Fig. 3 auf der Abtriebswelle 4 mit dem Loszahnrad 20 kann die Abtriebswelle 4" wie aus der Fig. 4 ersichtlich axial entsprechend verkürzt werden. Dies ermöglicht ferner ein Nachziehen oder Einschnüren des umgebenden Getriebegehäuses (vgl. gestrichelte Linien 24 der Fig. 4) mit dem damit verbundenen Gewinn an Bauraum im Motorraum des Kraftfahrzeuges.

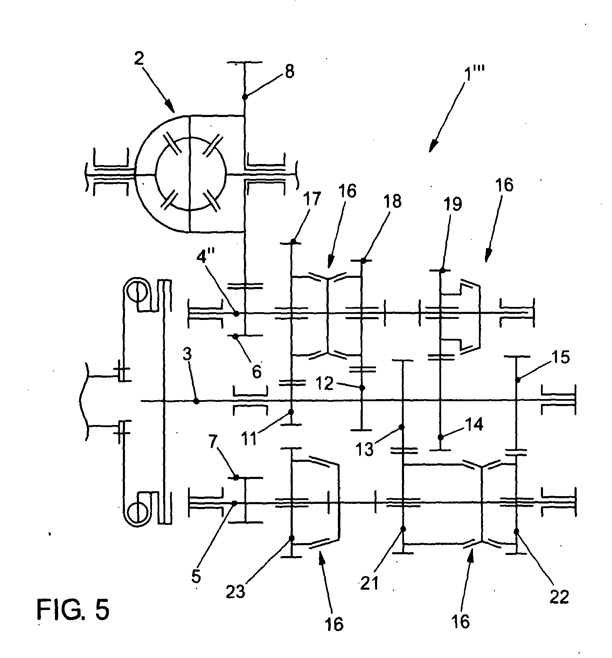

Die Fig. 5 zeigt ein weiteres, alternatives Fünfgang-Wechselgetriebe 1'" mit einer zur Fig. 4 abweichenden Anordnung der Vorwärts-Gangstufen drei bis fünf, wobei mit Ausnahme des Festzahnrades 11 für die erste Gangstufe und den Rückwärtsgang kein gemeinsames Zahnrad für zwei Gangstufen verwendet ist.

Die Eingangswelle 3 weist somit wieder fünf Festzahnräder 11, 12, 13, 14, 15 auf, die entsprechend der Gangverteilung des Wechselgetriebes 1 gemäß Fig. 1 verteilt sind.

So treibt das Festzahnrad 13 auf das Loszahnrad 21 und das Festzahnrad 15 auf das Loszahnrad 22, die über die gemeinsame Synchronkupplung 16 mit der Abtriebswelle 5 kuppelbar sind und die dritte bzw. fünfte Gangstufe bilden.

Das Festzahnrad 14 treibt zur Bildung der vierten Gangstufe auf das Loszahnrad 19, das über die einfache Synchronkupplung 16 mit der wiederum axial verkürzten Abtriebswelle 4" kämmt.

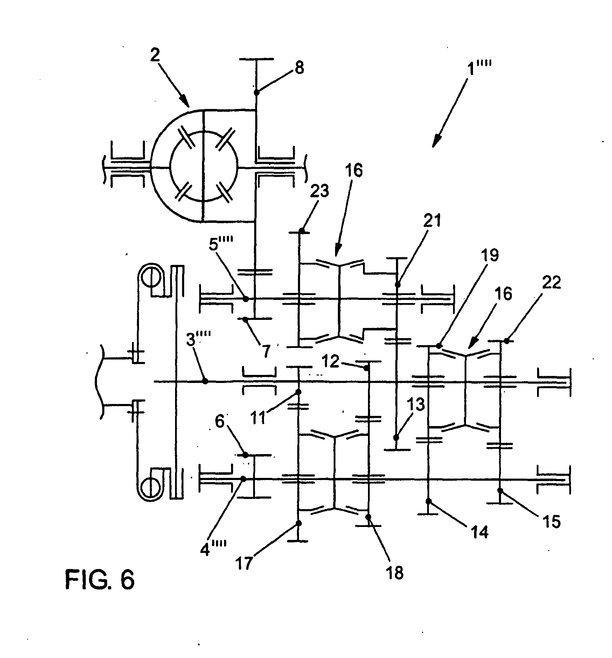

Die Fig. 6 schließlich zeigt ein modifiziertes Fünfgang-Wechselgetriebe 1"", bei dem die Position der Abtriebswellen 4 und 5 vertauscht ist. Dies hat den Vorteil, dass die nunmehr obere Abtriebswelle 5"" axial noch kürzer als im Vergleich die obere Abtriebswelle 4" der Fig. 4 und 5 ausgelegt werden kann. Die räumliche Anordnung der Abtriebswellen 4"" und 5"" ist spiegelbildlich betrachtet gleich der Fig. 2; d.h. z.B., dass der Abstand a₁ zwischen der Eingangswelle 3"" und der Abtriebswelle 4"" unverändert kleiner ist als der Abstand a₂ zwischen der Eingangswelle 3"" und der Abtriebswelle 5"", usw.

Auf der Eingangswelle 3"" sind drei Festzahnräder 11, 12, 13 und zwei über eine Synchronkupplung 16 schaltbare Loszahnräder 19 und 22 angeordnet.

Die Festzahnräder 11 und 12 wirken zur Bildung der ersten und zweiten Gangstufe des Wechselgetriebes 1"" mit den Loszahnrädern 17, 18 auf der Abtriebswelle 4"" zusammen, die mittels der dazwischen angeordneten Synchronkupplung 16 schaltbar sind.

Der Rückwärtsgang bildet sich aus dem gemeinsamen Zahnrad bzw. Festzahnrad 11, einem nicht dargestelltem Umkehrzahnrad und dem Loszahnrad 23, das auf der oberen Abtriebswelle 5"" angeordnet ist. Das Loszahnrad 23 ist über eine gemeinsame Synchronkupplung 16 schaltbar, über die auch das Loszahnrad 21 kuppelbar ist, das mit dem Festzahnrad 13 auf der Eingangswelle 3"" die fünfte Gangstufe des Wechselgetriebes 1"" darstellt.

Die auf der Eingangswelle 3"" angeordneten Loszahnräder 19, 22 sind mit Festzahnrädern 14, 15 auf der Abtriebswelle 4"" in Eingriff und stellen die dritte und vierte Gangstufe her.

Dadurch, dass wie ersichtlich auf der oberen Abtriebswelle 5"" nur der Rückwärtsgang (Loszahnrad 23) und die fünfte Gangstufe (Loszahnrad 21) angeordnet sind, die mit einer gemeinsamen Doppelsynchronkupplung 16 (üblicher Bauart) schaltbar sind, kann die Abtriebswelle 5"" axial extrem kurz ausgeführt sein, mit dem damit verbundenen Bauraumgewinn.

### Bezugszeichenliste

- 1: Geschwindigkeits-Wechselgetriebe
- 2: Differenzial
- 3: Eingangswelle
- 4: Erste Abtriebswelle
- 5: Zweite Abtriebswelle
- 6: Erstes Abtriebsritzel
- 7: Zweites Abtriebsritzel
- 8: Stirnzahnrad
- 9: Drehschwingungsdämpfer
- 10: Reibungskupplung
- 11: Festzahnrad
- 12: Festzahnrad
- 13: Festzahnrad
- 14: Festzahnrad
- 15: Festzahnrad
- 16: Synchronkupplungen
- 17: Loszahnrad
- 18: Loszahnrad
- 19: Loszahnrad
- 20: Loszahnrad
- 21: Loszahnrad
- 22: Loszahnrad
- 23: Loszahnrad Rückwärtsgang
- 24: Getriebegehäuse
- a₁ bis a₄:: Achsabstände der Getriebewellen

## Patentansprüche

1. Geschwindigkeits-Wechselgetriebe für Kraftfahrzeuge, mit zumindest einer Eingangswelle (3) sowie einer ersten Abtriebswelle (4), die Gangzahnräder (17, 20, 22) für kurz übersetzte Gangstufen, etwa erste und zweite Gangstufe, trägt, und einer zweiten Abtriebswelle (5), die Gangzahnräder (23, 19, 21) für länger übersetzte Gangstufen trägt, und die zueinander parallelen Drehachsen der Eingangswelle (3) und der Abtriebswellen (4, 5) einen definierten Abstand (a₁, a₂) zueinander aufweisen, und der Achsabstand (a₁) der ersten Abtriebswelle (4) zur Eingangswelle (3) kleiner ist als der Achsabstand (a₂) zwischen der Eingangswelle (3) und der zweiten Abtriebswelle (5),und dass ein gemeinsames Festzahnrad (11) auf der Eingangswelle (3) mit einem schaltbaren Loszahnrad (17) für die erste Gangstufe auf der ersten Abtriebswelle (4) und mit einem schaltbaren Loszahnrad (23) für einen Rückwärtsgang auf der zweiten Abtriebswelle (5) zusammenwirkt **dadurch gekennzeichnet** das gemeinsame Festzahnrad (11) der zwischen einer Brennkraftmaschine und der Eingangswelle (3) angeordneten Reibkupplung (10) nächstliegend angeordnet ist.

2. Geschwindigkeits-Wechselgetriebe nach Anspruch 1, **dadurch gekennzeichnet, dass** zumindest ein Festzahnrad (14, 15) auf der Eingangswelle (3') mit je einem Loszahnrad (19, 20, 21, 22) auf beiden Abtriebswellen (4, 5) zur Bildung zweier schaltbarer Vorwärts-Gangstufen kämmt, wobei die jeweils längere Gangstufe auf der ersten Abtriebswelle (4) ausgeführt ist.

3. Geschwindigkeits-Wechselgetriebe nach den Ansprüchen 1, oder 2, **dadurch gekennzeichnet, dass** die erste Abtriebswelle (4) räumlich oberhalb der zweiten Abtriebswelle (5) positioniert ist.

4. Geschwindigkeits-Wechselgetriebe nach einem der vorhergehenden Ansprüche, **dadurch gekennzeichnet, dass** die Eingangswelle (3) und die Drehachse des Stirnzahnrades (8) im Wesentlichen horizontal und die Drehachsen der Abtriebswellen (4, 5) im Wesentlichen vertikal versetzt zueinander liegen.

5. Geschwindigkeits-Wechselgetriebe nach einem der vorhergehenden Ansprüche, **dadurch gekennzeichnet, dass** die Abtriebswellen (4, 5) auf ein gemeinsames Stirnzahnrad (8) eines angebauten Differenziales (2) abtreiben.

6. Geschwindigkeits-Wechselgetriebe nach Anspruch 6, **dadurch gekennzeichnet, dass** der Achsabstand (a₃) zwischen der ersten Abtriebswelle (4) und der Drehachse des gemeinsamen Stirnzahnrades (8) des Differenziales (2) größer ist als der Achsabstand (a₄) zwischen der zweiten Abtriebswelle (5) und der Drehachse des Stirnzahnrades (8).

7. Geschwindigkeits-Wechselgetriebe nach einem der vorhergehenden Ansprüche, **dadurch gekennzeichnet, dass** alle Festzahnräder. (11, 12, 14, 15 und ggf. 13) auf der Eingangswelle (3) und alle Loszahnräder (17, 18, 19, 21, 22, 23 und ggf. 20) auf den beiden Abtriebswellen (4, 5) angeordnet sind.

8. Geschwindigkeits-Wechselgetriebe nach einem der vorhergehenden Ansprüche, **dadurch gekennzeichnet, dass** die Loszahnräder (17, 18, 19, 20) für die erste, zweite, vierte und sechste Gangstufe auf der ersten Abtriebswelle (4) und die Loszahnräder (21, 22, 23) für die dritte und fünfte Gangstufe sowie für den Rückwärtsgang auf der zweiten Abtriebswelle (5) positioniert sind.

9. Geschwindigkeits-Wechselgetriebe nach einem der Ansprüche 1 bis 7, **dadurch gekennzeichnet, dass** die Loszahnräder (17, 18, 20, 22) für die erste, zweite, fünfte und sechste Gangstufe auf der ersten Abtriebswelle (4) und die Loszahnräder (21, 19) für die dritte, vierte Gangstufe und das Loszahnrad (23) des Rückwartsganges auf der zweiten Abtriebswelle (5) angeordnet sind.

10. Geschwindigkeits-Wechselgetriebe nach einem der Ansprüche 1 bis 7, **dadurch gekennzeichnet, dass** bei fünf Gangstufen die Loszahnräder (17, 18, 22) für die erste, zweite und fünfte Gangstufe auf der ersten Abtriebswelle (4") und die Loszahnräder (19, 21) für die dritte und vierte.Gangstufe und das Loszahnrad (23) für den Rückwärtsgang auf der zweiten Abtriebswelle (5) vorgesehen sind.

11. Geschwindigkeits-Wechselgetriebe nach einem der Ansprüche 1 bis 7, **dadurch gekennzeichnet, dass** bei fünf Gangstufen die Loszahnräder (17, 18, 19) für die erste, zweite und vierte Gangstufe auf der ersten Abtriebswelle (4") und die Loszahnräder (21, 22) für die dritte und fünfte Gangstufe und das Loszahnrad (23) für den Rückwärtsgang auf der zweiten Abtriebswelle (5) vorgesehen sind.

12. Geschwindigkeits-Wechselgetriebe nach einem der vorhergehenden Ansprüche, **dadurch gekennzeichnet, dass** für zumindest zwei Gangstufen die Loszahnräder (19, 22) auf der Eingangswelle (3"") und die Festzahnräder (14, 15) auf der ersten Abtriebswelle 4"") angeordnet sind.

13. Geschwindigkeits-Wechselgetriebe nach einem der vorhergehenden Ansprüche, **dadurch gekennzeichnet, dass** bei fünf Gangstufen die oben liegende, erste oder zweite Abtriebswelle (4"; 5"") axial verkürzt ist.

14. Geschwindigkeits-Wechselgetriebe nach Anspruch 13, **dadurch gekennzeichnet, dass** die axial verkürzte Abtriebswelle (5"") nur das Losrad (23) für den Rückwärtsgang und ein Loszahnrad (21) einer Vorwärts-Gangstufe trägt.

## Claims

1. Change-speed gearbox for motor vehicles, having at least one input shaft (3) and having a first drive output shaft (4) which bears gear toothed wheels (17, 20, 22) for low-ratio gear stages such as a first and second gear stage, and having a second drive output shaft (5) which bears gear toothed wheels (23, 19, 21) for higher-ratio gear stages, and the axes of rotation, which are parallel to one another, of the input shaft (3) and of the drive output shafts (4, 5) having a defined spacing (a₁, a₂) to one another, and the axis spacing (a₁) of the first drive output shaft (4) to the input shaft (3) being smaller than the axis spacing (a₂) between the input shaft (3) and the second drive output shaft (5), and a common fixed toothed wheel (11) on the input shaft (3) interacting with a shiftable loose toothed wheel (17) for the first gear stage on the first drive output shaft (4) and with a shiftable loose toothed wheel (23) for a reverse gear on the second drive output shaft (5), **characterized in that** the common fixed toothed wheel (11) is arranged closest to the friction clutch (10) arranged between an internal combustion engine and the input shaft (3).

2. Change-speed gearbox according to Claim 1, **characterized in that** at least one fixed toothed wheel (14, 15) on the input shaft (3') meshes with in each case one loose toothed wheel (19, 20, 21, 22) on the two drive output shafts (4, 5) to form two shiftable forward gear stages, the in each case higher gear stage being formed on the first drive output shaft (4).

3. Change-speed gearbox according to Claims 1 or 2, **characterized in that** the first drive output shaft (4) is positioned spatially above the second drive output shaft (5).

4. Change-speed gearbox according to one of the preceding claims, **characterized in that** the input shaft (3) and the axis of rotation of the spur toothed wheel (8) lie substantially horizontally and the axes of rotation of the drive output shafts (4, 5) lie substantially vertically offset with respect to one another.

5. Change-speed gearbox according to one of the preceding claims, **characterized in that** the drive output shafts (4, 5) impart drive to a common spur toothed wheel (8) of an attached differential (2).

6. Change-speed gearbox according to Claim 6, **characterized in that** the axis spacing (a₃) between the first drive output shaft (4) and the axis of rotation of the common spur toothed wheel (8) of the differential (2) is greater than the axis spacing (a₄) between the second drive output shaft (5) and the axis of rotation of the spur toothed wheel (8).

7. Change-speed gearbox according to one of the preceding claims, **characterized in that** all the fixed toothed wheels (11, 12, 14, 15 and if appropriate 13) are arranged on the input shaft (3) and all the loose toothed wheels (17, 18, 19, 21, 22, 23 and if appropriate 20) are arranged on the two drive output shafts (4, 5).

8. Change-speed gearbox according to one of the preceding claims, **characterized in that** the loose toothed wheels (17, 18, 19, 20) for the first, second, fourth and sixth gear stages are positioned on the first drive output shaft (4) and the loose toothed wheels (21, 22, 23) for the third and fifth gear stages and for the reverse gear are positioned on the second drive output shaft (5).

9. Change-speed gearbox according to one of Claims 1 to 7, **characterized in that** the loose toothed wheels (17, 18, 20, 22) for the first, second, fifth and sixth gear stages are arranged on the first drive output shaft (4) and the loose toothed wheels (21, 19) for the third and fourth gear stages and the loose toothed wheel (23) of the reverse gear are arranged on the second drive output shaft (5).

10. Change-speed gearbox according to one of Claims 1 to 7, **characterized in that**, in the case of five gear stages, the loose toothed wheels (17, 18, 22) for the first, second and fifth gear stages are provided on the first drive output shaft (4'') and the loose toothed wheels (19, 12) for the third and fourth gear stages and the loose toothed wheel (23) for the reverse gear are provided on the second drive output shaft (5).

11. Change-speed gearbox according to one of Claims 1 to 7, **characterized in that**, in the case of five gear stages, the loose toothed wheels (17, 18, 19) for the first, second and fourth gear stages are provided on the first drive output shaft (4'') and the loose toothed wheels (21, 22) for the third and fifth gear stages and the loose toothed wheel (23) for the reverse gear are provided on the second drive output shaft (5).

12. Change-speed gearbox according to one of the preceding claims, **characterized in that**, for at least two gear stages, the loose toothed wheels (19, 22) are arranged on the input shaft (3"") and the fixed toothed wheels (14, 15) are arranged on the first drive output shaft (4"").

13. Change-speed gearbox according to one of the preceding claims, **characterized in that**, in the case of five gear stages, the upper, first or second drive output shaft (4", 5"") is axially shortened.

14. Change-speed gearbox according to Claim 13, **characterized in that** the axially shortened drive output shaft (5"") bears only the loose wheel (23) for the reverse gear and a loose toothed wheel (21) of one forward gear stage.

## Revendications

1. Boîte de vitesses pour véhicules automobiles, comprenant au moins un arbre d'entrée (3) ainsi qu'un premier arbre de sortie (4), qui porte des pignons de vitesse (17, 20, 22) pour des rapports de vitesse à courte démultiplication, par exemple les rapports de première et deuxième vitesses, et un deuxième arbre de sortie (5) qui porte des pignons de vitesse (23, 19, 21) pour des rapports de vitesse à plus longue démultiplication, et les axes de rotation mutuellement parallèles de l'arbre d'entrée (3) et des arbres de sortie (4, 5) présentant un espacement défini (a₁, a₂) les uns par rapport aux autres, et la distance axiale (a₁) du premier arbre de sortie (4) à l'arbre d'entrée (3) étant inférieure à la distance axiale (a₂) entre l'arbre d'entrée (3) et le deuxième arbre de sortie (5), et un pignon fixe commun (11) sur l'arbre d'entrée (3) coopérant avec un pignon fou commutable (17) pour le premier rapport de vitesse sur le premier arbre de sortie (4) et avec un pignon fou commutable (23) pour une vitesse de marche arrière sur le deuxième arbre de sortie (5), **caractérisée en ce que** le pignon fixe commun (11) est disposé le plus près de l'embrayage à friction (10) disposé entre un moteur à combustion interne et l'arbre d'entrée (3).

2. Boîte de vitesses selon la revendication 1, **caractérisée en ce qu'**au moins un pignon fixe (14, 15) sur l'arbre d'entrée (3') s'engrène avec un pignon fou respectif (19, 20, 21, 22) sur les deux arbres de sortie (4, 5) pour former deux rapports de vitesse de marche avant commutables, le rapport de vitesse le plus long étant réalisé à chaque fois sur le premier arbre de sortie (4).

3. Boîte de vitesses selon les revendications 1 ou 2, **caractérisée en ce que** le premier arbre de sortie (4) est positionné spatialement au-dessus du deuxième arbre de sortie (5).

4. Boîte de vitesses selon l'une quelconque des revendications précédentes, **caractérisée en ce que** l'arbre d'entrée (3) et l'axe de rotation du pignon droit (8) se situent essentiellement horizontalement et les axes de rotation des arbres de sortie (4, 5) se situent essentiellement de manière décalée verticalement l'un par rapport à l'autre.

5. Boite de vitesses selon l'une quelconque des revendications précédentes, **caractérisée en ce que** les arbres de sortie (4, 5) sont entraînés sur un pignon droit commun (8) d'un différentiel rapporté (2).

6. Boîte de vitesses selon la revendication 6, **caractérisée en ce que** la distance axiale (a₃) entre le premier arbre de sortie (4) et l'axe de rotation du pignon droit commun (8) du différentiel (2) est supérieure à la distance axiale (a₄) entre le deuxième arbre de sortie (5) et l'axe de rotation du pignon droit (8).

7. Boite de vitesses selon l'une quelconque des revendications précédentes, **caractérisée en ce que** tous les pignons fixes (11, 12, 14, 15 et éventuellement 13) sont disposés sur l'arbre d'entrée (3) et tous les pignons fous (17, 18, 19, 21, 22, 23 et éventuellement 20) sont disposés sur les deux arbres de sortie (4, 5).

8. Boîte de vitesses selon l'une quelconque des revendications précédentes, **caractérisée en ce que** les pignons fous (17, 18, 19, 20) pour les premier, deuxième, quatrième et sixième rapports de vitesse sont positionnés sur le premier arbre de sortie (4) et les pignons fous (21, 22, 23) pour le troisième et le cinquième rapport de vitesse ainsi que pour la vitesse de marche arrière sont positionnés sur le deuxième arbre de sortie (5).

9. Boîte de vitesses selon l'une quelconque des revendications 1 à 7, **caractérisée en ce que** les pignons fous (17, 18, 20, 22) pour les premier, deuxième, cinquième et sixième rapports de vitesse sont disposés sur le premier arbre de sortie (4) et les pignons fous (21, 19) pour le troisième et le quatrième rapport de vitesse et le pignon fou (23) de la vitesse de marche arrière sont disposés sur le deuxième arbre de sortie (5).

10. Boite de vitesses selon l'une quelconque des revendications 1 à 7, **caractérisée en ce que**, lorsqu'il y a cinq rapports de vitesse, les pignons fous (17, 18, 22) pour les premier, deuxième et cinquième rapports de vitesses sont prévus sur le premier arbre de sortie (4") et les pignons fous (19, 21) pour le troisième et le quatrième rapport de vitesse et le pignon fou (23) pour la vitesse de marche arrière sont prévus sur le deuxième arbre de sortie (5).

11. Boîte de vitesses selon l'une quelconque des revendications 1 à 7, **caractérisée en ce que**, lorsqu'il y a cinq rapports de vitesse, les pignons fous (17, 18, 19) pour les premier, deuxième et quatrième rapports de vitesse sont prévus sur le premier arbre de sortie (4") et les pignons fous (21, 22) pour les troisième et cinquième rapports de vitesse et le pignon fou (23) pour la vitesse de marche arrière sont prévus sur le deuxième arbre de sortie (5).

12. Boîte de vitesses selon l'une quelconque des revendications précédentes, **caractérisée en ce que** pour au moins deux rapports de vitesse, les pignons fous (19, 22) sont disposés sur l'arbre d'entrée (3"") et les pignons fixes (14, 15) sont disposés sur le premier arbre de sortie (4"").

13. Boîte de vitesses selon l'une quelconque des revendications précédentes, **caractérisée en ce que**, lorsqu'il y a cinq rapports de vitesse, l'arbre de sortie situé en haut, le premier ou le deuxième (4" ; 5""), est raccourci axialement.

14. Boîte de vitesses selon la revendication 13, **caractérisée en ce que** l'arbre de sortie raccourci axialement (5"") ne porte que le pignon fou (23) pour la vitesse de marche arrière et un pignon fou (21) d'un rapport de vitesse de marche avant.
